(19) Europäisches Patentamt
European Patent Office
Office européen des brevets

(11) Veröffentlichungsnummer : **0 170 034**
**B1**

# (12) EUROPÄISCHE PATENTSCHRIFT

(45) Veröffentlichungstag der Patentschrift : **27.07.88**

(51) Int. Cl.⁴ : **C 07 F 9/52**// C07F9/53

(21) Anmeldenummer : **85107671.1**

(22) Anmeldetag : **21.06.85**

## (54) Verfahren zur Herstellung von Chlor-phenyl-phosphanen.

(30) Priorität : **30.06.84 DE 3424182**

(43) Veröffentlichungstag der Anmeldung : **05.02.86 Patentblatt 86/06**

(45) Bekanntmachung des Hinweises auf die Patenterteilung : **27.07.88 Patentblatt 88/30**

(84) Benannte Vertragsstaaten : **CH DE FR GB IT LI NL**

(56) Entgegenhaltungen :
**EP-A- 0 110 305**
**EP-A- 0 122 587**
**SU-A- 362 026**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Kleiner, Hans-Jerg, Dr. Ing.**
**Altkönigstrasse 11a**
**D-6242 Kronberg/Taunus (DE)**

**EP 0 170 034 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein verbessertes Verfahren zur Herstellung von Chlor-phenyl-phosphanen. Unter Chlorphenyl-phosphanen werden hier die unter die allgemeine Formel

$$(C_6H_5)_nPCl_{3-n}$$

worin n = 1 oder 2
fallenden beiden Verbindungen Dichlor-phenyl-phosphan

$$C_6H_5PCl_2$$

und Chlor-diphenyl-phosphan

$$(C_6H_5)_2PCl$$

verstanden.

Sie sind hauptsächlich wertvolle Zwischenprodukte auf verschiedenen Sachgebieten wie z. B. dem Pflanzenschutz- und Polymeren-Sektor.

Zu Pflanzenschutzmitteln kommt man beispielsweise — ausgehend von Dichlor-Phenyl-phosphan — auf dem Weg über das Phenylthiophosphonsäuredichlorid $C_6H_5P(S)Cl_2$. Aus Dichlor-phenyl-phosphan ist weiterhin auf bekannte Weise etwa auch benzolphosphonige Säure $C_6H_5P(O)(OH)H$ erhältlich, die für sich oder in Form ihrer Salze als Stabilisator für Polyamide von erheblicher wirtschaftlicher Bedeutung ist.

Aus Chlor-diphenyl-phosphan lassen sich auf dem Weg über die entsprechenden Diphenylphosphinigsäureester $(C_6H_5)_2POR$ (R=organischer Rest) z. B. Acylphosphanoxidverbindungen herstellen die als Photoinitiatoren für photopolymerisierbare Messen geeignet sind (EP-A-7508).

Zur Herstellung der Chlor-phenyl-phosphane ist eine Reihe verschiedener Methoden bekannt. So werden z. B. nach dem in der DE-A-3 216 381 beschriebenen Verfahren Chlor-diphenyl-phosphan und Dichlor-phenyl-phosphan durch Umsetzung von Triphenylphosphan $(C_6H_5)_3P$ mit Phosphortrichlorid $PCl_3$ bei Temperaturen zwischen etwa 320 und 700 °C ohne den Zusatz irgendwelcher Katalysatoren erhalten ; die Umsetzung verläuft nach folgender Gleichung :

$$(C_6H_5)_3P + PCl_3 \longrightarrow (C_6H_5)_2PCl + C_6H_5PCl_2$$

Durch einen Überschuß an Triphenylphosphan (Molverhältnis Triphenylphosphan : Phosphortrichlorid ⩾ 2 : 1) läßt sich die Reaktion in Richtung auf das Chlor-diphenylphosphan,
durch einen Überschuß an Phosphortrichlorid (Molverhältnis Triphenylphosphan : Phosphortrichlorid = 1 : ⩾ 2) in Richtung auf das Dichlor-phenyl-phosphan lenken ; hierfür sind folgende Reaktionsgleichungen maßgebend :

Molverhältnis $(C_6H_5)_3P : PCl_3 \geqslant 2:1$

$$2\,(C_6H_5)_3P + PCl_3 \longrightarrow 3\,(C_6H_5)_2PCl$$

Molverhältnis $(C_6H_5)_3P : PCl_3 = 1 : \geqslant 2$

$$(C_6H_5)_3P + 2\,PCl_3 \longrightarrow 3\,C_6H_5PCl_2$$

Praktisch bei den gleichen Temperaturen setzt sich Triphenylphosphan auch mit Dichlor-phenyl-phosphan zu Chlordiphenyl-phosphan um (DE-A-3 216 379) :

$$(C_6H_5)_3P + C_6H_5PCl_2 \longrightarrow 2\,(C_6H_5)_2PCl$$

In ähnlicher Weise reagiert Phosphortrichlorid mit Chlor-diphenyl-phosphan zu Dichlor-phenyl-phosphan (DE-A-3 216 380) :

$$PCl_3 + (C_6H_5)_2PCl \longrightarrow 2\,C_6H_5PCl_2$$

Bei sämtlichen vorerwähnten Reaktionen wird eine Phenylgruppe der Phenylgruppen-reicheren P-Verbindung gegen ein Cl-Atom der Cl-reicheren P-Verbindung ausgetauscht.

Ebenso auf dem Austausch von Phenylgruppen gegen Cl-Atome beruht das in der DE-A-32 44 031 beschriebene Verfahren zur Herstellung aromatischer Phosphor-chlor-Verbindungen durch Umsetzung von Phosphanoxyden oder -sulfiden der Formel A)

$$(C_6H_5)_m\overset{X}{\overset{\|}{P}}Cl_{3-m} \qquad (A)$$

worin X = 0 oder S und m = 1, 2 oder 3
mit P-Cl-Verbindungen der Formel B)

$$(C_6H_5)_{3-n}PCl_n \qquad (B)$$

worin n = 1, 2 oder 3
bei Temperaturen zwischen etwa 330 und 700 °C.

Wenn in den Verbindungen der Formel A) X = 0 und m = 3, handelt es sich um Triphenylphosphanoxyd ;
wenn in den Verbindungen der Formel B) n = 3, resultiert das Phosphortrichlorid. Die Umsetzung des Triphenylphosphanoxyds mit Phosphortrichlorid liefert zunächst Chlordiphenyl-phosphanoxyd (= Diphenylphosphinsäurechlorid) und Dichlor-phenyl-phosphan :

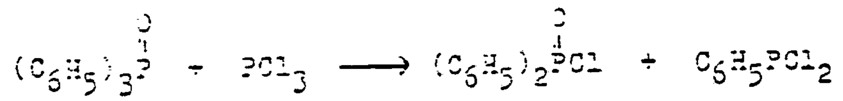

Das Dichlor-phenyl-phosphan kann sich mit weiterem Triphenylphosphanoxid zu Chlor-diphenylphosphanoxyd (= Diphenylphosphinsäurechlorid) und Chlor-diphenyl-phosphan umsetzen :

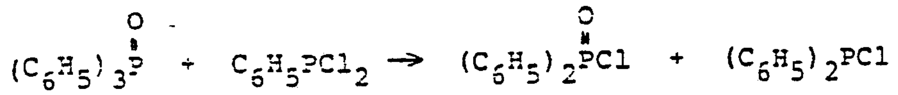

Die Reaktion verläuft umso besser, je Phenylgruppen-reicher die Ausgangsverbindungen A) und je Cl-reicher die anderen Ausgangsverbindung B) sind. Ein Ausführungsbeispiel für die Umsetzung etwa des Dichlor-phenyl-phosphanoxyds (= Verbindung der Formel A) mit X = 0 und m = 1 ; = Benzolphosphonsäuredichlorid) mit Chlor-diphenyl-phosphan (= Verbindung der Formel B) mit n = 1) enthält die DE-A-32 44 031 nicht.

Aliphatische Chlor-phosphane können u. a. auch durch Desoxygenierung der Chloride aliphatischer P-O-Säuren erhalten werden. So wird z. B. nach dem in dem SU-Urheberschein 362026 offenbarten Verfahren Methylphosphonsäuredichlorid mit einem aliphatischen Phosphan — speziell mit tri-n-butylphosphan $(n\text{-}C_4H_9)_3P$ und Tri-i-amylphosphan $(i\text{-}C_5H_{11})_3P$ — bei Temperaturen zwischen 175 und 220 °C umgesetzt, wobei der Sauerstoff des Methylphosphonsäuredichlorids auf des aliphatische Phosphan übertragen wird. Der Umsetzung liegt folgende Reaktionsgleichung zu Grunde :

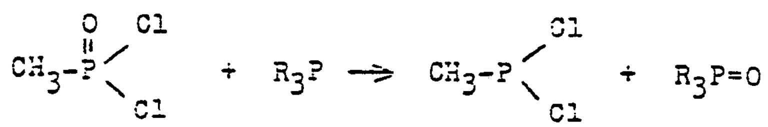

(R = Alkyl)

Ersetzt man hier jedoch das aliphatische Phosphan durch das technisch besser zugängliche und billigere Triphenylphosphan, so wird — wie eigene Versuche gezeigt haben — nur eine für praktische Bedürfnisse unzureichende Ausbeute an Dichlor-alkyl-phosphan erhalten (weniger als 30 % d. Th.).

Nach dem in der älteren, nicht vorveröffentlichen EP-A-122 587 vorgeschlagenen Verfahren gelingt die Desoxygenierung mittels Triphenylphosphan dann, wenn man als zu desoxygenierende P-O-Verbindungen die Chloride von P-O-Säuren der folgenden Formel einsetzt :

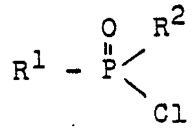

worin $R^1$ = aromatischer oder heterocyclischer Rest, und $R^2$ = aliphatischer Rest oder Cl.

Für $R^2$ = aliphatischer Rest handelt es sich um aromatisch- (oder heterocyclisch-) aliphatische Phosphinsäurechloride,
für $R^2$ = Cl um aromatische (oder heterocyclische) Phosphonsäuredichloride.

Durch diese Umsetzung, die normalerweise bei Temperaturen zwischen etwa 100 und etwa 350 °C abläuft, werden aromatische und heterocyclische Dichlorphosphane sowie aromatisch- und heterocyclisch-aliphatische Monochlorphosphane in Ausbeuten zwischen etwa 75 und 100 % d. Th. erhalten ; der Umsetzung liegt folgende Reaktionsgleichung zugrunde :

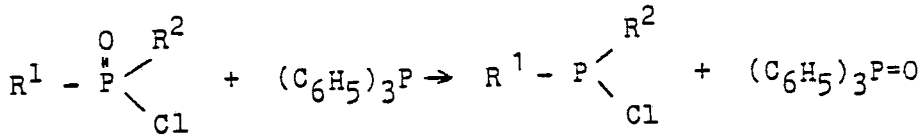

$R^1$ und $R^2$ besitzen die vorerwähnte Bedeutung.

Ein Chlor-phenyl-phosphan ist nach dieser Umsetzung dann erhältlich, wenn man als Ausgangsverbindung Benzolphosphonsäuredichlorid (= Verbindung der vorstehend angegebenen allgemeinen Formel mit $R^1 = C_6H_5$ und $R^2 = Cl$) einsetzt :

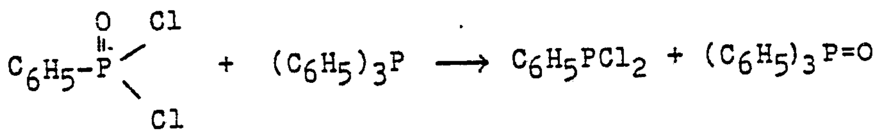

In weiterer Ausbildung dieser Desoxygenierungsreaktion wurde nun gefunden, daß sich auch Diphenylphosphinsäurechlorid $(C_6H_5)_2P(O)Cl$ mittels Triphenylphosphan zu Chlordiphenyl-phosphan desoxygenieren läßt ; das Chlor-diphenylphosphan kann dann seinerseits wieder zur Desoxygenierung des Dichlorids der Benzolphosphonsäure zu Dichlor-phenyl-phosphan verwendet werden.

Erfindungsgegenstand ist daher ein Verfahren zur Herstellung von Chlor-phenyl-phosphanen der Formel

$$(C_6H_5)_nPCl_{3-n},$$

worin n = 2 oder 1

dadurch gekennzeichnet, daß man Chloride aromatischer P-O-Säuren der Formel

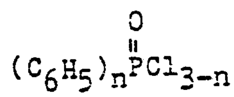

worin n die vorerwähnte Bedeutung besitzt,

im Falle n = 2 mit Triphenylphosphan, und

im Falle n = 1 mit Chlor-diphenyl-phosphan

bei Temperaturen zwischen 300 und 600 °C umsetzt. Dabei laufen folgende Desoxygenierungsreaktionen ab :

a) 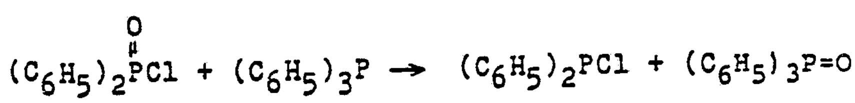

Diphenylphosphin säurechlorid

b) 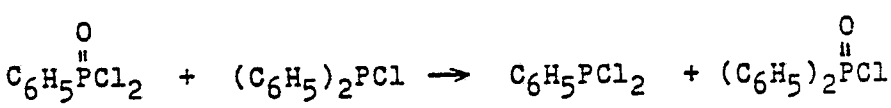

Benzolphosphonsäure dichlorid

Die Ausbeuten der beiden Einzelreaktionen a) und b) liegen durchweg zwischen etwa 60 und 100 % d. Th.

Das Gelingen und die mit hoher Ausbeute verlaufende Desoxygenierung der Chloride rein aromatischer P-O-Säuren (Diphenylphosphinsäurechlorid, Benzolphosphonsäuredichlorid) mittels eines aromatischen Phosphans (Triphenyl-phosphan, Chlor-diphenyl-phosphan) waren überraschend, weil sich rein aliphatische Phosphonsäuredichloride mit dem (aromatischen) Triphenylphosphan nur sehr unvollständig zu den entsprechenden Dichlorphosphanen desoxygenieren lassen. Die Ausgangsstoffe der Einzelreaktion b) (Benzolphosphonsäuredichlorid und Chlor-diphenylphosphan) fallen zwar rein formal auch unter die allgemeinen Formeln der Ausgangsstoffe für das Verfahren gemäß DE-A-32 44 031 ; wie durch intensive Untersuchung und Nacharbeitung dieser Reaktion erst jetzt gefunden wurde, findet wie für das Verfahren der DE-A-32 44 031 typische $C_6H_5$-Cl-Austauschreaktion im Falle des Erhitzens von Benzolphosphonsäuredichlorid mit Chlor-diphenyl-phosphan nur in außerordentlichen untergeordnetem

Maß statt. Die hier praktisch ausschließlich ablaufende Reaktion ist die Desoxygenierung des Benzolphosphonsäuredichlorids.

Die Ausgangsverbindungen für das erfindungsgemäße Verfahren sind Diphenylphosphinsäurechlorid und Triphenylphosphan bzw. Benzolphosphonsäuredichlorid und Chlordiphenyl-phosphan.

Diphenylphosphinsäurechlorid wird z. B. durch alkalische Hydrolyse von Triphenylphosphanoxyd und nachfolgende Chlorierung beispielsweise mit $SOCl_2$ erhalten.

Triphenylphosphan ist ein gängiges Handelsprodukt, über dessen Herstellung kaum berichtet zu werden braucht.

Benzolphosphonsäuredichlorid ist leicht z. B. durch Umsetzung von Brombenzol mit Triäthylphosphit/Ni-Katalysator mit nachfolgender Einwirkung von $COCl_2$ oder $SOCl_2$ erhältlich.

Chlor-diphenyl-phosphan ist durch Desoxygenierung von Diphenylphosphinsäurechlorid gemäß Einzelreaktion a) des erfindungsgemäßen Verfahrens oder gegebenenfalls auch durch die eingangs erwähnten Methoden des Standes der Technik zugänglich.

Zur Durchführung des erfindungsgemäßen Verfahrens werden die Ausgangsverbindungen Diphenylphosphinsäurechlorid und Triphenylphosphan bzw. Benzolphosphonsäuredichlorid und Chlor-diphenylphosphan zunächst vermischt. Insbesondere zwischen Diphenylphosphinsäurechlorid und Triphenylphosphan ergeben sich homogene Mischungen gegebenenfalls erst bei höheren Temperaturen. Die Komponenten werden zweckmäßig im stöchiometrischen Molverhältnis von etwa 1 : 1 eingesetzt. Überschüsse der einen oder anderen Komponente sind jedoch möglich, wobei ein Überschuß von der sauerstoffaufnehmenden Verbindung zweckmäßig ist.

Im Temperaturbereich zwischen 300 und 500 °C, vorzugsweise zwischen 350 und 450 °C, wird das Gemisch der Ausgangsstoffe bevorzugt unter Überdruck, insbesondere unter dem sich in einem geschlossenen Reaktionsgefäß einstellenden (autogenen) Druck, umgesetzt. Die Reaktionszeit liegt hier zwischen etwa einer und dreißig Stunden.

Im Temperaturbereich zwischen 500 und 600 °C, vorzugsweise zwischen 500 und 550 °C, wird das Gemisch der Ausgangstoffe bevorzugt bei Atmosphärendruck umgesetzt. Bei der Druckführung dieser Verfahrensvariante wird zweckmäßig das Gemisch der Ausgansstoffe mit Hilfe einer Dosiervorrichtung in eine geheizte Reaktionszone eindosiert. Als Reaktionszone eignet sich z. B. ein elektrisch geheiztes Rohr. Das aus der Reaktionszone austretende Reaktionsgemisch wird in einer Vorlage gesammelt. Dabei kann es vorteilhaft sein zu kühlen. Die Reaktionszeiten liegen hier praktisch nur in der Größenordnung von Sekunden oder Minuten.

Es kann zweckmäßig sein, unter Inertgasatmosphäre (Stickstoff Argon, etc.) zu arbeiten, insbesondere bei der Verfahrensvariante, die bei 500 bis 600 °C durchgeführt wird.

Sowohl die kontinuierliche als auch die diskontinuierliche Durchführung des Verfahrens sind möglich.

Die Aufarbeitung der Reaktionsgemische erfolgt auf übliche Weise, z. B. mit Hilfe von Destillationsverfahren. Bei dem Anfall von Triphenylphosphanoxyd kann auch dessen Kristallisationstendenz genutzt werden, die Hauptmenge des anfallenden Triphenylphosphanoxyds (gegebenenfalls unter Verwendung eines geeigneten Lösungsmittels) kristallin abzutrennen.

Wegen der leichten Zugänglichkeit der Ausgangsprodukte, der einfachen Durchführbarkeit der Reaktion sowie der hohen Ausbeuten an Chlor-phenyl-phosphanen stellt die Erfindung eine erhebliche Bereicherung der Technik dar.

Die folgenden Beispiele sollen der weiteren Erläuterung der Erfindung dienen. Auf die Erfindungsbeispiele folgt noch ein Vergleichsbeispiel, welches zeigt, daß bei der Umsetzung eines aliphatischen Phosphonsäuredichlorids mit Triphenylphosphan nur relativ wenig Dichlorphosphan entsteht.

## Erfindungsbeispiele

### Beispiel 1

20 g (= 0,0846 mol) Diphenylphosphinsäurechlorid und 30 g (= 0,115 mol) Triphenylphosphan wurden 20 Stunden bei 400 °C in einem 90 ml-Druckrohr gehalten. Das anfallende Reaktionsgemisch wurde mit einer kleinen Kolonne andestilliert bei 26,6 Pa bis zu einer Innentemperatur von etwa 185 °C. Das Destillat betrug 32 g. Es enthielt auf Grund eines $^{31}$P-NMR-Spektrums unter anderem 30,1 % Chlor-diphenyl-phosphan und 15 % Diphenylphosphinsäurechlorid. Das entspricht bei einem Umsatz von 76 % einer Ausbeute von 68 % d. Th., bezogen auf eingesetztes Diphenylphosphinsäurechlorid.

### Beispiel 2

20 g (= 0,1025 mol) Benzolphosphonsäuredichlorid und 40 g (= 0,1815 mol) Chlor-diphenylphosphan wurden 20 Stunden bei 370 °C in einem 90 ml-Druckrohr gehalten. Das anfallende Reaktionsgemisch wurde ohne Kolonne bei 26,6 Pa biz zu einer Innentemperatur von ca. 200 °C destilliert. Dabei wurden 55 g Destillat erhalten. Das Destillat bestand auf Grund eines $^{31}$P-NMR-Spektrum aus 30,9 % Dichlor-phenyl-phosphan, 28,9 % Chlor-diphenyl-phosphan, 31,8 % Diphenylphosphinsäurechlorid, 3,8 % nicht umgesetztes Benzolphosphonsäuredichlorid, 1,5 % Triphenylphosphanoxid und 3,1 %

Triphenylphosphan. Die angegebenen einzelnen Komponenten lassen sich destillativ trennen, 30,9 % von 55 g ergeben ca. 17 g Dichlor-phenyl-phosphan. Ohne Berücksichtigung des wiederzugewinnenden Benzolphosphonsäuredichlorids ergibt das eine Ausbeute von ca. 93 % d. Th., bezogen auf eingesetztes Benzolphosphonsäuredichlorid.

Vergleichsbeispiel

67,2 g (= 0,46 Mol) Ethanphosphonsäuredichlorid und 60 g (= 0,23 Mol) Triphenylphosphan wurden unter Stickstoffatmosphäre bei 195 °C unter schwachem Rückfluß gerührt. Während 22 Stunden sank die Innentemperatur unter Rückflußbedingungen auf 185 °C. Nach dem Abkühlen wurde bei 5,07 kPa destilliert. Dabei wurden bei einer Übergangstemperatur von 26 °C ca. 8 g Dichlor-ethyl-phosphan, die in einer gekühlten Vorlage kondensierten, und dann bei einer Übergangstemperatur von 80 °C bis zu einer Innentemperatur von 200 °C 37 g Ethanphosphonsäuredichlorid erhalten. Der Destillationsrückstand wurde anschließend bei 0,1 kPa destilliert. Dabei wurden ca. 45 g nicht umgesetztes Triphenylphosphan erhalten.

Bezogen auf das eingesetzte Triphenylphosphan beträgt die Ausbeute an Dichlor-ethyl-phosphan ca. 27 % d. Th.

**Patentansprüche**

1. Verfahren zur Herstellung von Chlor-phenyl-phosphanen der Formel

$$(C_6H_5)_nPCl_{3-n},$$

worin n = 2 oder 1,
dadurch gekennzeichnet, daß man Chloride aromatischer P-O-Säuren der Formel

$$(C_6H_5)_n\overset{O}{\overset{\|}{P}}Cl_{3-n}$$

worin n die vorerwähnte Bedeutung besitzt,
im Falle n = 2 mit Triphenylphosphan, und
im Falle n = 1 mit Chlor-diphenyl-phosphan
bei Temperaturen zwischen 300 und 600 °C umsetzt.

2. Verfahren nach Anspruch 1, dadurch gekennzeichnet, daß man die Umsetzung im Temperaturbereich zwischen 300 und 500 °C, vorzugsweise 350 bis 450 °C, unter erhöhtem Druck, insbesondere unter autogenem Druck, durchführt.

3. Verfahren nach Anspruch 1, dadurch gekennzeichnet, daß man die Umsetzung im Temperaturbereich zwischen 500 und 600 °C unter Atmosphärendruck durchführt.

**Claims**

1. Process for the preparation of chloro-phenyl-phosphines of the formula

$$(C_6H_5)_nPCl_{3-n},$$

in which n = 2 or 1,
characterized in that chlorides of aromatic P-O-acids of the formula

$$(C_6H_5)_n\overset{O}{\overset{\|}{P}}Cl_{3-n}$$

in which n has the abovementioned meaning, are reacted
with triphenylphosphine in the case where n = 2, and
with chloro-diphenyl-phosphine in the case where n = 1,
at temperatures between 300 and 600 °C.

2. Process according to Claim 1, characterized in that the reaction is carried out in the temperature range between 300 and 500 °C, preferably 350 to 450 °C, under elevated pressure, in particular under autogenous pressure.

3. Process according to Claim 1, characterized in that the reaction is carried out in the temperature range between 500 and 600 °C unter atmospheric pressure.

**Revendications**

1. Procédé pour préparer des chloro-(phényl)-phosphines répondant à la formule :

$$(C_6H_5)_nPCl_{3-n}$$

dans laquelle n est égal à 2 ou à 1, procédé caractérisé en ce qu'on fait réagir des chlorures d'acides oxygénés du phosphore aromatiques répondant à la formule :

$$(C_6H_5)_n\overset{O}{\overset{\|}{P}}Cl_{3-n}$$

dans laquelle n a la signification indiquée ci-dessus,

avec la triphénylphosphine dans le cas où n est égal à 2, et

avec la chloro-(diphényl)-phosphine dans le cas où n est égal à 1,

à des températures comprises entre 300 et 600 °C.

2. Procédé selon la revendication 1 caractérisé en ce qu'on effectue la réaction dans l'intervalle de température allant de 300 à 500 °C, de préférence de 350 à 450 °C, sous pression élevée, plus spécialement sous la pression autogène.

3. Procédé selon la revendication 1 caractérisé en ce qu'on effectue la réaction dans l'intervalle de température allant de 500 à 600 °C, sous la pression atmosphérique.